# EUROPEAN PATENT SPECIFICATION

(11) **EP 3 675 703 B1**
(45) Date of publication and mention of the grant of the patent: **29.07.2026**
(21) Application number: 18878317.9
(22) Date of filing: 13.11.2018
(51) Int. Cl.: G05D 1/00, G06T 7/73, A47L 9/28, A47L 11/40

(54) **MOVING APPARATUS FOR CLEANING AND CONTROL METHOD THEREOF**
BEWEGLICHE VORRICHTUNG ZUR REINIGUNG UND STEUERVERFAHREN DAFÜR
APPAREIL MOBILE SERVANT À DES FINS DE NETTOYAGE ET PROCÉDÉ DE COMMANDE DE CELUI-CI

(30) Priority: 15.11.2017 KR 20170151931
(43) Date of publication of application: 08.07.2020
(73) Proprietor: Samsung Electronics Co., Ltd., Suwon-si, Gyeonggi-do 16677 (KR)
(72) Inventor: RYU, Min Woo, Suwon-si Gyeonggi-do 16677 (KR); KIM, Min Jae, Suwon-si Gyeonggi-do 16677 (KR); KWON, Young Do, Suwon-si Gyeonggi-do 16677 (KR); LEE, Dong Hyun, Suwon-si Gyeonggi-do 16677 (KR); LEE, Dong Hun, Suwon-si Gyeonggi-do 16677 (KR); LIM, Hyoung Woo, Suwon-si Gyeonggi-do 16677 (KR)
(74) Representative: Walaski, Jan Filip
(86) International application number: PCT/KR2018/013766
(87) International publication number: WO 2019/098631

(56) References cited:
- EP-A1- 3 168 705
- GB-A- 2 513 912
- JP-A- 2006 127 448
- KR-A- 20030 013 009
- KR-A- 20040 071 002
- KR-A- 20090 088 587
- KR-A- 20110 090 307
- US-A1- 2016 124 431
- US-A1- 2016 143 500

## Description

### Technical Field

The disclosure relates to a moving apparatus for autonomously moving and cleaning a floor and a control method thereof. More particularly the disclosure relates to a moving apparatus that is returned to and docked on an auxiliary apparatus such as a docking station for battery charging, maintenance, etc.

### Background Art

A cleaning robot and the like moving apparatus for cleaning refers to an electronic apparatus that includes a cleaning module for cleaning a predetermined ground such as a floor in a home, and a moving module for moving on the ground, and moves and cleans the ground autonomously without a user's control. The cleaning robot typically includes a docking station or a base station as an auxiliary apparatus for battery charging of the cleaning robot or checking various conditions of the moving apparatus for cleaning. The cleaning robot is not connected to an external power source or the docking station by a wire, but has a wireless structure to freely move. Further, the cleaning robot is docked on the docking station to charge a built-in battery. For example, when the battery needs to be charged as its power level is dropped to a predetermined level while the cleaning robot is moving and cleaning the floor, or when a cleaning process given by a preset algorithm is completed, the cleaning robot moves to find a location of the docking station and is then docked on the docking station.

For the cleaning robot to find a location of the docking station, i.e. to recognize the docking station in surrounding environments, some schemes have been proposed.

One scheme is to use an infrared sensing structure. In this case, infrared guide signals are emitted from the docking station at left, right and center sides, and sensed by light receiving sensors provided at left and right sides of the cleaning robot so that the cleaning robot can find the docking station. However, this scheme leads to a complicated structure and increases manufacturing costs since the docking station needs elements for emitting infrared light and the cleaning robot needs elements for receiving the infrared light. Further, in this scheme, a range where the cleaning robot can sense the docking station is relatively short since the infrared light is susceptible to interference, and it may be difficult for the cleaning robot to do cleaning around the docking station.

Another scheme is to use a map-based structure. The cleaning robot stores a map of a use environment such as an inside of a home, and does mapping the location of the docking station onto the corresponding map when departing from the docking station. When the cleaning robot needs to move to the docking station, the cleaning robot specifies the location of the docking station on the map and then moves to the specified location. However, in this scheme, the cleaning robot may be out of position with respect to the location of the docking station because the cleaning robot slips while moving or for the like reasons. Further, in this scheme, the cleaning robot cannot correctly and rapidly find the docking station since the cleaning robot cannot map the location of the docking station onto the map when the cleaning robot does not initially depart from the docking station.

In this regard, a structure or method may be needed for correctly moving the cleaning robot to be in position for the docking station by a simple structure of the cleaning robot to determine the location of the docking station.

GB2513912A discloses a method of guiding an autonomous vehicle or robot towards a docking station using a camera mounted on the vehicle to sense fiducial markers on the docking station.

The above information is presented as background information only to assist with an understanding of the disclosure. No determination has been made, and no assertion is made, as to whether any of the above might be applicable as prior art with regard to the disclosure.

### Disclosure of Invention

### Solution to Problem

In accordance with an aspect of the present invention, there is provided a moving apparatus for cleaning according to claim 1. Optional features are set out in the dependent claims.

The moving apparatus for cleaning can expand a movable range where the moving apparatus can operate as separated from the station apparatus.

The plurality of marks may include a first mark and a second mark.

The at least one processor may control the moving apparatus to move toward the first mark when the first mark is detected, and control the moving apparatus to move toward the second mark by repositioning the moving apparatus so as to correct deviation of the moving apparatus in relation to the station apparatus when the second mark is detected while the moving apparatus is moving toward the first mark.

The at least one processor may determine a distortion of the second mark based on a relative position difference between a plurality of points extracted from the second mark, and correct the deviation of the moving apparatus in relation to the station apparatus by rotating the moving apparatus so that no distortion of the second mark is detected from the image.

The at least one processor may designate the plurality of points along a contour of the second mark.

The second mark may be arranged to be overlapped within the first mark at a certain area of the station apparatus.

The second mark may be arranged to be separated from the first mark at a certain area of the station apparatus.

The at least one processor may divide the image into a plurality of colour channels, and acquire the mark from image information of one or more colour channels previously set among the plurality of colour channels.

In accordance with another aspect of the invention, there is provided a method of controlling a moving apparatus for cleaning according to claim 9.

The plurality of marks may include a first mark, and a second mark.

The moving of the moving apparatus may include moving the moving apparatus toward the first mark when the first mark is detected, and moving the moving apparatus toward the second mark by repositioning the moving apparatus so as to correct deviation of the moving apparatus in relation to the station apparatus when the second mark is detected while the moving apparatus is moving toward the first mark.

The moving of the moving apparatus toward the second mark may include determining a distortion of the second mark based on a relative position difference between a plurality of points extracted from the second mark, and rotating the moving apparatus so that no distortion of the second mark is detected from the image.

The moving of the moving apparatus toward the second mark may include designating the plurality of points along a contour of the second mark.

The second mark may be arranged to be overlapped within the first mark at a certain area of the station apparatus.

The second mark may be arranged to be separated from the first mark at a certain area of the station apparatus.

The detecting of the at least one mark among the plurality of marks may include dividing the image into a plurality of colour channels, and acquiring the mark from image information of one or more colour channels previously set among the plurality of colour channels.

Other aspects, advantages, and salient features of the disclosure will become apparent to those skilled in the art from the following detailed description, which, taken in conjunction with the annexed drawings, discloses various embodiments of the disclosure. In the following description "aspects" and "embodiments" will be described. It should be understood that if these aspects or embodiments are not in accordance with the appended claims, then they do not fall within the scope of the invention.

### Brief Description of Drawings

FIG. 1 is a perspective view showing a cleaning robot and a docking station according to the invention;
FIG. 2 is a perspective view of showing that a cleaning robot according to the invention senses a mark of the docking station in front thereof;
FIG. 3 illustrates an example that is useful for understanding the invention of a plurality of marks provided in the docking station;
FIG. 4 is a flowchart for showing a control method of the cleaning robot that is useful for understanding the invention;
FIG. 5 illustrates an example that is useful for understanding the invention, in which the plurality of marks provided in the docking station are arranged not to be overlapped;
FIG. 6 illustrates that the plurality of marks provided in the docking station according to the invention are different from each other in shape according to corresponding distances;
FIG. 7 is a flowchart for showing a control method of the cleaning robot according to an embodiment of the invention;
FIG. 8 illustrates an example showing a method of extracting feature points from a mark recognized by the cleaning robot according to an embodiment of the invention;
FIG. 9 illustrates an example showing a method for the cleaning robot according to an embodiment of the invention to determine a distortion of the marks based on a relationship between the feature points;
FIG. 10 illustrates an example showing a principle for the cleaning robot according to an embodiment of the invention to derive the marks from a predetermined image;
FIG. 11 is a flowchart of a method for the cleaning robot according to an embodiment of the invention to analyse a colour space of a captured image and recognize a mark;
FIG. 12 illustrates an example that the cleaning robot according to an embodiment of the invention designates identification points in an image captured by in an image sensor image;
FIG. 13 illustrates an example that the cleaning robot according to an embodiment of the invention extracts the identification points from the image captured by the image sensor;
FIG. 14 is a flowchart of a control method for the cleaning robot according to an embodiment of the invention; and
FIG. 15 is a block diagram of the cleaning robot according to an embodiment of the invention.

### Best Mode for Carrying out the Invention

The following description with reference to the accompanying drawings is provided to assist in a comprehensive understanding of various embodiments of the disclosure as defined by the claims. In addition, descriptions of well-known functions and constructions may be omitted for clarity and conciseness.

The terms and words used in the following description and claims are not limited to the bibliographical meanings, but are merely used by the inventor to enable a clear and consistent understanding of the disclosure.

It is to be understood that the singular forms "a," "an," and "the" include plural referents unless the context clearly dictates otherwise. Thus, for example, reference to "a component surface" includes reference to one or more of such surfaces.

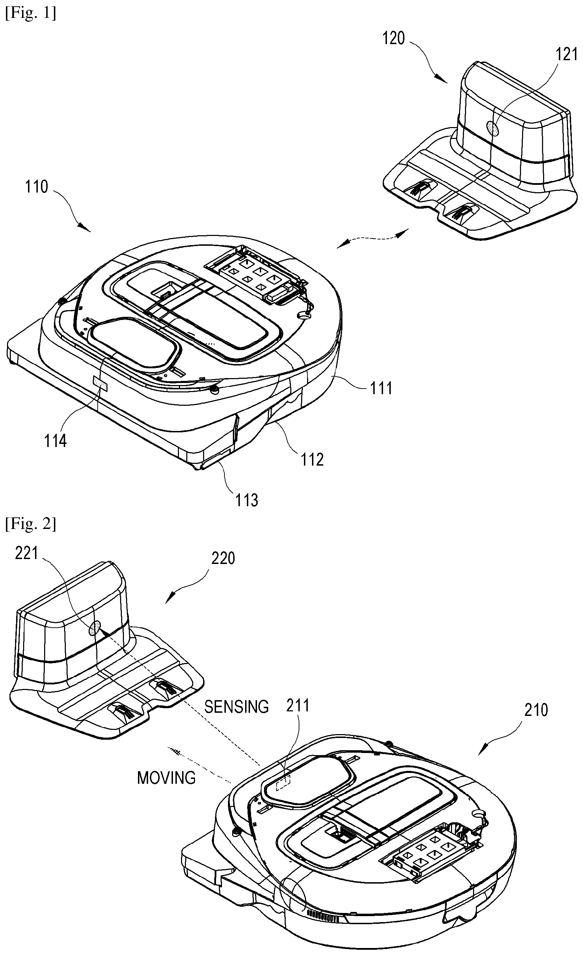

FIG. 1 is a perspective view showing a cleaning robot and a docking station.

Referring to FIG. 1, a system includes a moving apparatus autonomously moving and performing a predetermined operation, and an auxiliary apparatus separated from the moving apparatus, stationarily installed at a predetermined location, and assisting the moving apparatus in the operation. In this embodiment, the moving apparatus refers to a moving apparatus for cleaning or a cleaning robot 110, which autonomously moves and cleans a floor within an area of a predetermined range, and the auxiliary apparatus refers to a station apparatus or a docking station 120 for charging a battery of the cleaning robot 110. However, there are no limits to each scheme for embodying the moving apparatus and the auxiliary apparatus to which the concept of the disclosure is applied, and various kinds of apparatuses as well as the cleaning robot 110 and the docking station 120 may be materialized as the moving apparatus or the auxiliary apparatus.

The cleaning robot 110 includes a housing 111 forming an outer appearance of a main body and including general installed elements, a traveler 112 moving the cleaning robot 110 in a predetermined direction, a cleaner 113 cleaning a floor as the cleaning robot 110 moves, and an image sensor 114 capturing an image of an environment around the cleaning robot 110. The foregoing elements are some elements, which are provided outside the housing 111, among all the elements of the cleaning robot 110. Further, driving power for the general operations of the cleaning robot 110 such as the traveler 112 and the cleaner 113 is given by a built-in battery of the housing 111.

To move the cleaning robot 110, the traveler 112 basically includes one or more wheels being in contact with on a floor, a motor used as a driver for generating the driving power for the movement, and a link and shaft structure for transferring the driving power of the motor to the wheel. The traveler 112 includes a plurality of wheels, which are individually driven, so that the cleaning robot 1100 can have various movements such as a forward movement, a backward movement, a turning movement, a stationary movement, etc. The moving direction and speed of the cleaning robot 110, caused by the traveler 112, are determined by a control signal transmitted from a processor in the cleaning robot 110 to the motor.

The cleaner 113 includes a brush for sweeping foreign materials such as dust or the like on a floor, a suction module for sucking the swept foreign materials, a storage tank for storing the suctioned foreign materials, etc. The cleaner 113 operates to clean a floor while the cleaning robot 110 is moving or remains stationary by the traveler 112.

The image sensor 114 generates an image by taking or capturing the surroundings of the cleaning robot 110. There are no limits to places where the image sensor 114 is installed in the housing 111. In this embodiment, the image sensor 114 is installed at a front or upper portion of the housing 111 so as to capture a forward side of the cleaning robot 110, i.e. a moving direction in which the cleaning robot 110 moves.

The image sensor 114, to which a complementary metal-oxide semiconductor (CMOS) sensor or a charge coupled device (CCD) sensor may be applied, captures the forward side of the cleaning robot 110 and generates a digital image based on captured results. The image sensor 114 may be mounted with various kinds of additional optical lenses to capture a surrounding image in a wider range or a more precisely.

Besides, the cleaning robot may include various elements, for example, a user interface installed on the top of the housing 111 for the purpose of a user's control or a state display of the cleaning robot 110. For example, the user interface includes an input button structure such as a power button for turning on and off the cleaning robot 110, a toggle button for starting and stopping the operation of the cleaning robot 110, a returning button for returning the cleaning robot 110 to the docking station 120, etc. and a display for displaying a current state of the cleaning robot 110 and a state corresponding to a user's instruction.

The docking station 120 is stationarily installed at a certain location within a use environment of the cleaning robot 110, and connected to an external power source. The docking station 120 basically charges the battery of the cleaning robot 110 when the cleaning robot 110 is docked thereon, and additionally performs various maintenance operations of the cleaning robot 110.

With this configuration, the cleaning robot 110 determines the location of the docking station 120 within the use environment when an event for returning to the docking station 120 occurs while being separated from the docking station 120, and moves to the determined location so as to be docked on the docking station 120. Here, in this embodiment, a mark 121 is provided on the outer side of the docking station 120 so that the cleaning robot 110 can correctly determine the location of the docking station 120.

Here, there may be various returning events, for example, a case where a power level of the battery in the cleaning robot 110 is lower than or equal to a predetermined level, a case where a user inputs a returning instruction, or a case where it reaches a time previously set for returning to the docking station 120.

Below, a method of determining the location of the docking station 120 as the cleaning robot 110 according to the embodiment senses the mark 121 will be described.

FIG. 2 is a perspective view of showing that a cleaning robot according to an embodiment senses a mark of the docking station.

Referring to FIG. 2, a cleaning robot 210 captures an image of external environments through an image sensor 211 when an event for returning to a docking station 220 occurs while the cleaning robot 210 is being separated from the docking station 220. When a mark 221 is detected in the captured image, the cleaning robot 210 determines the location of the docking station 220 based on the location of the detected mark 221 and moves toward the determined location.

Meanwhile, the cleaning robot 210 may be located at a relatively short or long distance from the docking station 220. Further, even though the cleaning robot 210 is located at a relatively long distance from the docking station 220, the cleaning robot 210 can move near the docking station 220 and be located at a relatively short distance from the docking station 220. Here, the short distance and the long distance are relative concept to each other, and it is thus possible to distinguish between the short distance and the long distance with respect to a location at a predetermined distance from the docking station 220. However, the distance is not limited to a specific numerical value.

The image sensor 211 has a field of view (FOV) as a unique characteristic value, and the mark 221 is provided by taking a recognizable range of the image sensor 211, which is allowable by the FOV, into account. According to an embodiment, the mark 221 includes a plurality of marks respectively provided corresponding to distances separated from the docking station 220. For example, the mark 221 includes a first mark corresponding to a location within a first separation distance range from the docking station 220, and a second mark corresponding to a location within a second separation distance range, which is nearer to the docking station 220 than the first separation distance range. That is, the first mark indicates a mark for a long distance corresponding to a location of a long distance range from the docking station 220, and the second mark indicates a mark for a short distance corresponding to a location of a short distance range from the docking station 220.

When the cleaning robot 210 according to an embodiment is in a location corresponding to the long distance range from the docking station 220, the cleaning robot 210 recognizes the mark for the long distance among the plurality of marks 221, and moves toward the location of the docking station 220 in accordance with the recognition results. Further, when the cleaning robot 210 enters the short distance range from the docking station 220, the cleaning robot 210 moves with respect to the mark for the short distance instead of the mark for the long distance. Of course, when the cleaning robot 210 starts in the short distance range, the cleaning robot 210 moves with respect to the mark for the short distance.

Like this, the cleaning robot 210 according to an embodiment recognizes at least one mark corresponding to the location of each distance range among the plurality of marks 221 provided corresponding to the distance ranges from the docking station 220, and thus finds the docking station 220 at a distance longer than that of a conventional one. Further, this embodiment can be achieved by a simple structure.

In this embodiment, two marks are provided corresponding to the separation distance. However, the number of marks may increase as the distance range is more subdivided. For example, when the distance range is divided into three ranges for a short distance, a middle distance and a long distance, a total of three marks may be provided corresponding to the locations in three distance ranges. Meanwhile, the case of three or more marks is also based on the case of two marks, and thus repetitive descriptions thereof will be avoided.

Below, descriptions will be made with regard to the examples and features of the plurality of marks 221.

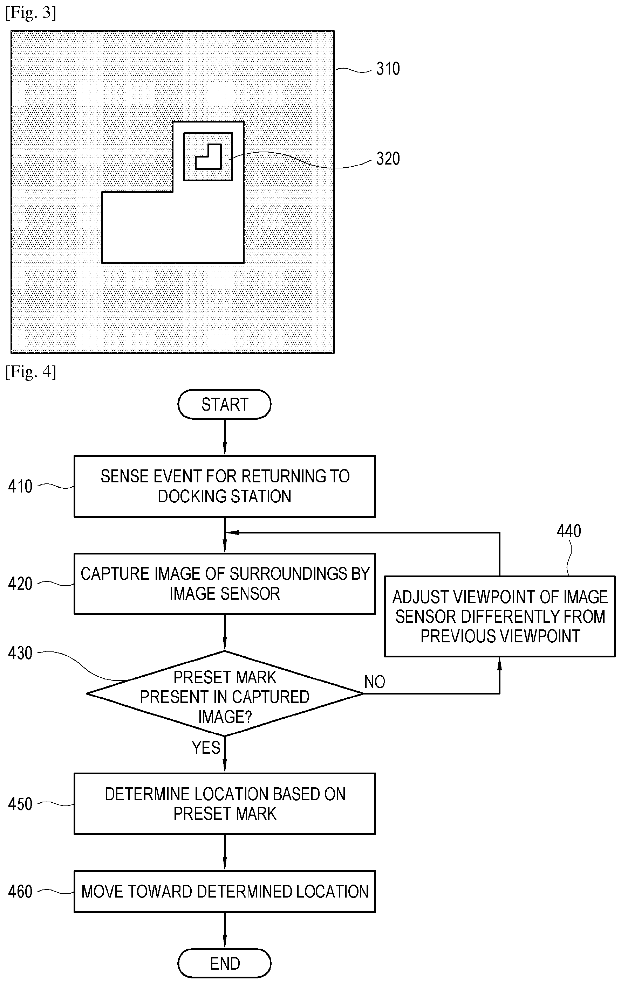

FIG. 3 illustrates an example of a plurality of marks provided in the docking station.

Referring to FIG. 3, the mark in this example includes a longdistance mark 310 provided to be recognized in a location at a relatively long distance from the docking station, and a short distance mark 320 provided to be recognized in a location at a relatively short distance from the docking station. In this example, the long distance mark 310 and the short distance mark 320 have a similar figure and are arranged to be overlapped with each other. In the case where the long distance mark 310 and the short distance mark 320 are overlapped with each other, the cleaning robot does not need to largely change a viewpoint of the image sensor when switching over from the long distance mark 310 to the short distance mark 320 in order to recognize the short distance mark 320. Further, the long distance mark 310 is bigger than the short distance mark 320.

When the cleaning robot is in the long distance from the docking station, it is difficult for the cleaning robot to recognize the short distance mark 320 since the short distance mark 320 is far away from the cleaning robot and is relatively small. Thus, the cleaning robot recognizes the relatively big long distance mark 310.

When the cleaning robot is in the middle distance from the docking station, the cleaning robot can recognize both the long distance mark 310 and the short distance mark 320. Thus, the cleaning robot determines the location of the docking station based on one of the long distance mark 310 and the short distance mark 320.

When the cleaning robot is in the short distance from the docking station, the long distance mark 310 is out of the allowable range of the FOV that the image sensor of the cleaning robot has. That is, the cleaning robot can recognize not the entire of the long distance mark 310 but a part of the long distance mark 310 at a location near to the docking station. Thus, the cleaning robot recognizes the short distance mark 320 which is smaller than the long distance mark 310 without being out of the allowable range of the FOV that the image sensor has.

In this example, the plurality of marks 310 and 320 are provided respectively corresponding to the distances from the docking station, so that the distance range in which the cleaning robot is allowed to return to the docking station can be more expanded. As the long distance mark 310 becomes bigger, the distance range in which the cleaning robot is allowed to return to the docking station increases. However, the long distance mark 310 is provided on the docking station, and thus the size of the long distance mark 310 is limited by the area of the docking station where the long distance mark 310 is marked.

Below, a control method of the cleaning robot according to an example will be described.

FIG. 4 is a flowchart for showing a control method of the cleaning robot according to an example.

Referring to FIG. 4, at operation 410 the cleaning robot senses an event for returning to the docking station.

At operation 420 the cleaning robot captures an image of a surrounding environment through the image sensor. The cleaning robot may capture an image at one viewpoint of the image sensor or may capture a plurality of images while changing a plurality of viewpoints.

At operation 430 the cleaning robot determines whether a preset mark is present in the captured image. Here, the cleaning robot is configured to store information about the preset marks.

When the mark is not present in the captured image, at operation 440 the cleaning robot adjusts the viewpoint of the image sensor to be different from the previous state and returns to the operation 420.

On the other hand, when the mark is present in the captured image, at operation 450 the cleaning robot determines the location with respect to the mark. To determine the location, there may be many methods. For example, one point of the mark may be set as a reference point.

At operation 460 the cleaning robot moves toward the determined location. In this operation, the cleaning robot determines a deviation degree from the mark or the docking station when it is close to the docking station. To correct the deviation degree, the cleaning robot rotates and moves to be in position for docking on the docking station.

In the foregoing example, the long distance mark and the short distance mark are provided to have a similar figure and arranged to be overlapped with each other. Alternatively, the long distance mark and the short distance mark may be designed to have different figures or arranged to be separated without being overlapped with each other. Below, this alternative embodiment will be described.

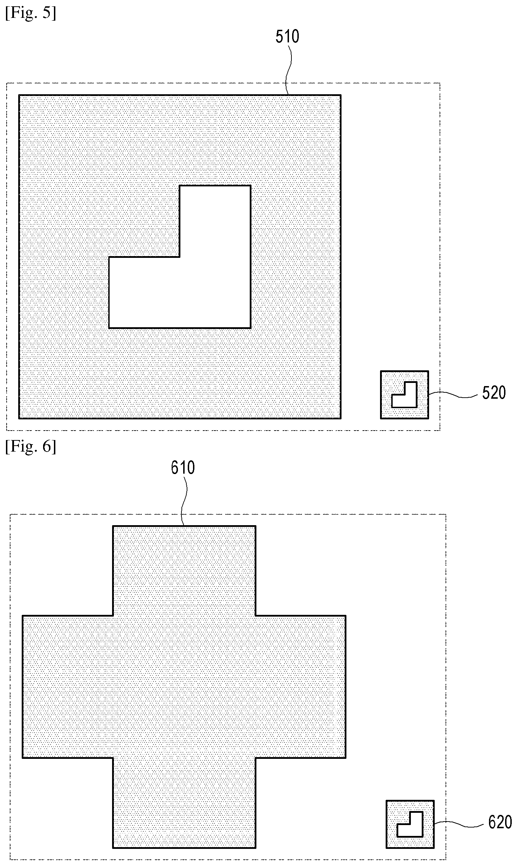

FIG. 5 illustrates an example that the plurality of marks provided in the docking station are arranged not to be overlapped.

Referring to FIG. 5, a long distance mark 510 to be recognized at a relatively long distance from the docking station, and a short distance mark 520 to be recognized at a relatively short distance from the docking station are provided in the docking station. The long distance mark 510 and the short distance mark 520 are different in size but have the same shape. However, in this embodiment, the short distance mark 520 is not arranged inside but separated from the long distance mark 510.

A distance between the long distance mark 510 and the short distance mark 520 is not limited to a specific numerical value, but the long distance mark 510 and the short distance mark 520 may be arranged to be adjacent to each other by taking the allowable range of the FOV of the image sensor into account so that the change in the viewpoint of the image sensor cannot be required.

FIG. 6 illustrates an example that the plurality of marks provided in the docking station according to an embodiment are different in shape from each other according to corresponding distances.

Referring to FIG. 6, a long distance mark 610 to be recognized at a relatively long distance from the docking station, and a short distance mark 620 to be recognized at a relatively short distance from the docking station are provided in the docking station. In the foregoing embodiments, the long distance mark is an enlargement of the short distance mark. On the other hand, the long distance mark 610 and the short distance mark 620 in this embodiment are different from each other in shape as well as size.

Like this, when the long distance mark 610 and the short distance mark 620 are different in shape from each other, the cleaning robot can easily determine whether the cleaning robot is currently at a relatively long distance or a relatively short distance from the docking station in accordance with the shape of the mark recognized by the image sensor. Further, the cleaning robot may selectively perform a long distance operation or a short distance operation in accordance with the determination results.

The long distance operation and the short distance operation required in the cleaning robot may be variously designed. For example, an operation for correcting the deviation of the cleaning robot in relation to the docking station so that the cleaning robot can be in position for docking on the docking station is the short distance operation because the accuracy of the operation is high when the distance between the cleaning robot and the docking station is short. On the other hand, the cleaning robot has to rapidly move toward the docking station without performing such deviation correcting operation when the distance between the cleaning robot and the docking station is long, and therefore the operation of moving the cleaning robot at a preset speed or higher is the long distance operation. That is, the cleaning robot moves toward the docking station at a preset speed or higher when the image sensor senses the long distance mark 610, and performs the correcting operation with the decreased moving speed when the image sensor senses the short distance mark 620.

Thus, the cleaning robot according to the embodiment selectively performs the preset operation corresponding to one sensed between the long distance mark 610 and the short distance mark 620.

Below, a control method of the cleaning robot will be described.

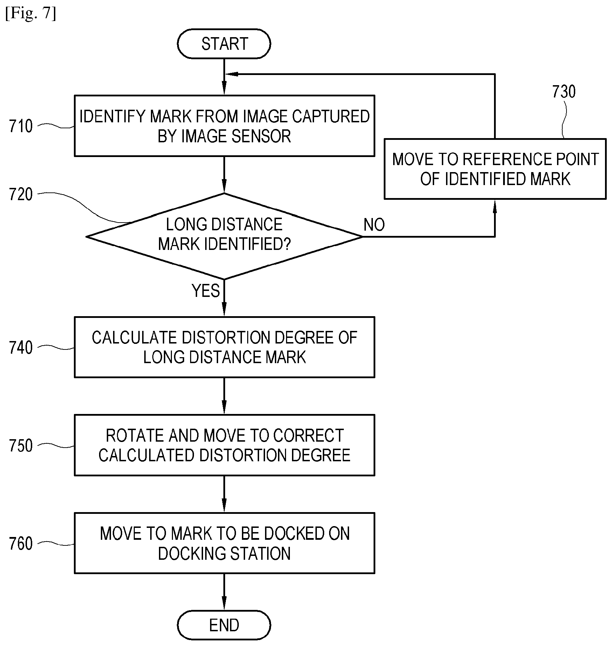

FIG. 7 is a flowchart for showing a control method of the cleaning robot according to an embodiment.

Referring to FIG. 7, at operation 710 the cleaning robot identifies a mark in an image captured by the image sensor.

At operation 720 the cleaning robot determines whether the identified mark is the long distance mark.

When the identified mark is the long distance mark, at operation 730 the cleaning robot moves toward a reference point of the mark. Here, the reference point refers to a previously appointed point, which includes any point on the mark, such as a center point, a vertex, etc. of the mark.

On the other hand, when the identified mark is not the long distance mark, i.e. when the identified mark is the short distance mark, at operation 740 the cleaning robot calculates a distortion degree of the mark.

At operation 750 the cleaning robot rotates and moves to correct the calculated distortion degree. For example, the cleaning robot rotates and moves to be in front of the mark, thereby making the image sensor sense the mark without the distortion.

At operation 760 the cleaning robot moves toward the mark and is then docked on the docking station.

Below, a method of determining the distortion of the mark will be described.

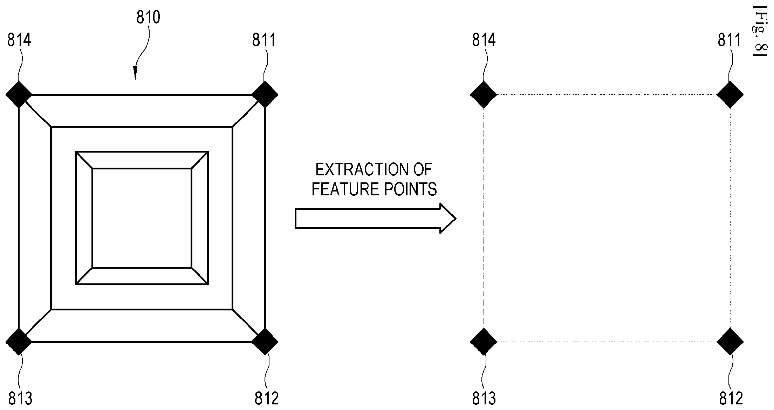

FIG. 8 illustrates an example showing a method of extracting feature points from a mark recognized by the cleaning robot according to an embodiment.

Referring to FIG. 8, the cleaning robot recognizes a predetermined mark 810, and extracts a plurality of feature points 811, 812, 813 and 814 from the mark 810 in accordance with the shape of the mark 810. The extraction of the feature points 811, 812, 813 and 814 from the mark 810 is based on a previously appointed principle. For example, the feature points 811, 812, 813 and 814 may be designated along the contour of the mark 810. In this embodiment, when the contour of the mark 810 forms a quadrangle, four vertices of the mark 810 may be designated as the feature points 811, 812, 813 and 814. However, this embodiment is merely an example, and various methods may be used for extracting the plurality of feature points 811, 812, 813 and 814 from the mark 810.

On the basis of a relationship among the plurality of feature points 811, 812, 813 and 814 extracted from the mark 810, the cleaning robot may determine whether the currently recognized mark 810 has a distortion, and determines a distortion degree when the mark 810 has the distortion.

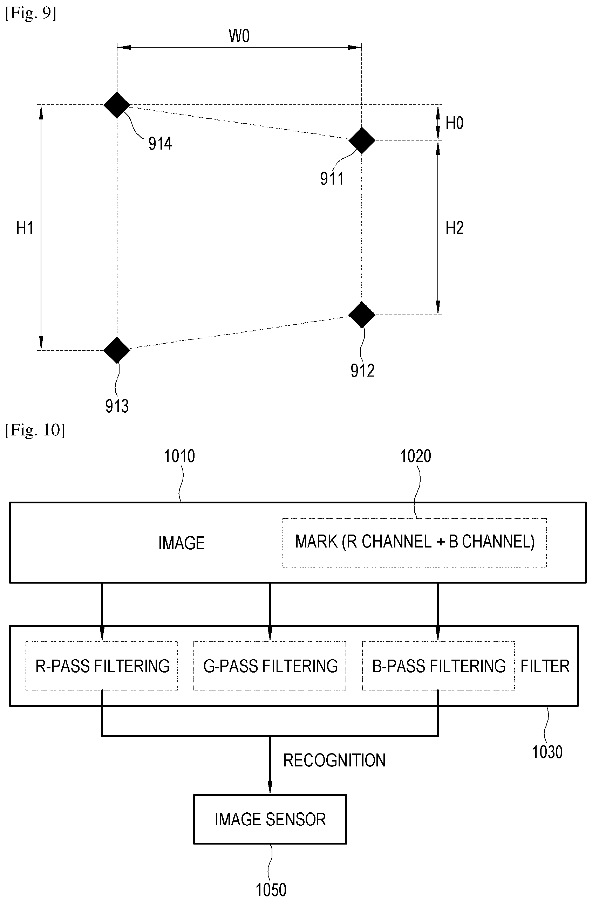

FIG. 9 illustrates an example showing a method for the cleaning robot according to an embodiment to determine the distortion of the marks based on a relationship between the feature points.

Referring to FIG. 9, the cleaning robot determines its own moving direction or rotated degree based on a relationship between a plurality of feature points 911, 912, 913 and 914 extracted from the mark, for example, a relative position relationship between the plurality of feature points 911, 912, 913 and 914.

When the mark is the long distance mark, the cleaning robot derives the centric coordinates of the mark based on the plurality of feature points 911, 912, 913 and 914, and moves toward the derived centric coordinates. The operation of correcting the deviation of the cleaning robot from the right position of the docking station is accurately performed when the distance between the cleaning robot and the docking station is short. Therefore, when the cleaning robot is in the long distance from the docking station, the cleaning robot moves with respect to the centric coordinates of the mark.

There are various methods of deriving the centric coordinates of the mark. When the feature points are designated as the outer vertexes of the mark like the embodiment, an intersection of lines joining the feature points may be regarded as the centric coordinates of the mark.

When the mark is the short distance mark, the cleaning robot determines a distortion degree of the mark based on the plurality of feature points 911, 912, 913 and 914, and determines the deviation of the cleaning robot in relation to the docking station in accordance with the distortion degree of the mark. Further, the cleaning robot derives the centric coordinates of the mark, and more accurately determines a docking position by taking both the centric coordinates of the mark and the distortion of the mark into account.

For example, suppose that there are only two feature points 911 and 914, and the mark is provided to have the two feature points 911 and 914 at the same height when the cleaning robot is arranged to face the front of the docking station. In this case, a distortion angle of the mark may be derived from a difference H0 in height between the two feature points 911 and 914, and a distance of the cleaning robot from the docking station may be derived from a difference WO in distance between the two feature points 911 and 914.

Alternatively, suppose that there are four feature points 911, 912, 913 and 914, and a distance H1 between two feature points 913 and 914 and a distance H2 between two feature points 911 and 912 are arranged at the same height and have the same length when the cleaning robot is arranged to face the front of the docking station. In this case, the distortion angle may be derived based on the difference in length or height between the distance H1 and the distance H2.

The cleaning robot calculates a numerical value corresponding to the distortion degree of the mark, and then rotates and moves to make the numerical value of the distortion degree be 0.

Meanwhile, in the foregoing embodiments, the mark is provided to be distinguishable with the naked eye so that the image sensor can recognize the mark without additional configuration. However, an aesthetic point of view may be taken into account to provide the mark in the docking station, and an embodiment will be described in this regard.

FIG. 10 illustrates an example showing a principle for the cleaning robot according to an embodiment to derive the marks from a predetermined image.

Referring to FIG. 10, a manufacturer provides a predetermined image 1010 on the docking station. The image 1010 is given as a design pattern, a picture, a symbol, a logo, etc., which is aesthetically comfortable for a user, and includes a mark 1020. The mark 1020 is not only unrecognizable even though a user sees the image 1010 with the naked eye, but also unrecognizable by an image sensor unless the image sensor includes a specific configuration for identifying the mark 1020.

The mark 1020 is generated by image information based on some color channels among various color channels of a color space for forming contents of the image 1010. Various kinds of schemes, such as RGB, YUV, HSV, HLS, etc. may be applied to the color space. In this embodiment, descriptions will be made in relation to RGB channels. For example, when the mark 1020 generated by image information based on an R channel and a B channel is included in the image 1010, it is difficult to identify the mark 1020 with the naked eyes since the image includes image information of a G channel as well as the R and B channels. Like this, the mark 1020 is hidden in the image 1010, and therefore the embodiment contributes to security.

The cleaning robot in this embodiment recognizes the mark 1020 as follows. An image sensor 1050 needs external incident light to recognize surroundings including the image 1010. The light is subjected to filtering by a filter 1030 arranged in a preceding part of the image sensor 1050 before entering the image sensor 1050. The filter 1030 includes one or more color filters for respectively obtaining image information about colors of a preset channel among a plurality of color channels.

For example, the filter 1030 applies R-pass filtering and B-pass filtering to the light, so that light of R-channel image information and B channel image information can travel toward the image sensor 1050. Of course, the filter 1030 is capable of performing G-pass filtering, but the G-pass filtering is not necessary in this embodiment since the mark 1020 does not have G channel image information.

The light passed through the filter 1030, i.e. light of the R channel image information based on the R-pass filtering and light of the B channel image information based on the B-pass filtering are incident together to the image sensor 1050. Thus, the image sensor 1050 can recognize the mark 1020 where the R channel image information and the B channel image information are composed.

In the foregoing embodiment, the image sensor recognizes the mark as the filter filters the light incident to the image sensor. However, the mark may be derived as the image sensor analyzes the color space of the captured image without performing the filtering in the filter. Below, descriptions will be made in this regard.

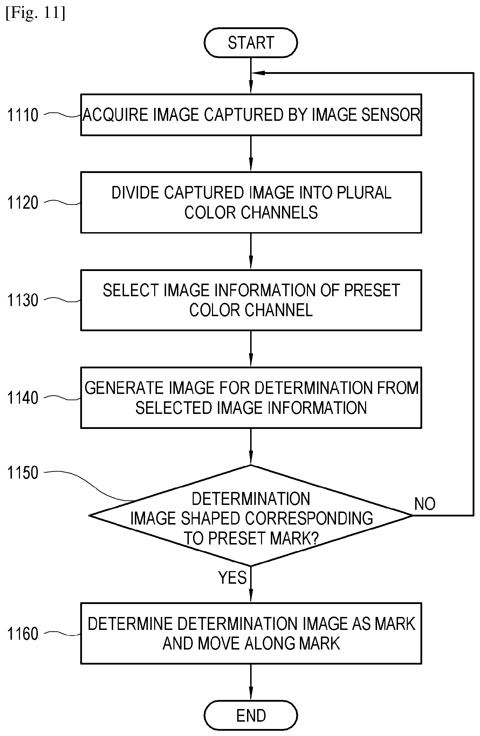

FIG. 11 is a flowchart of a method for the cleaning robot according to an embodiment to analyze a color space of a captured image and recognizes a mark.

Referring to FIG. 11, at operation 1110 the cleaning robot acquires an image captured by the image sensor. The image is captured by the image sensor in a state that separate color filtering is not applied thereto.

At operation 1120 the cleaning robot divides the captured image into a plurality of color channels based on a preset color space. For example, in a case of an RGB color space, the image may be divided into pieces of image information corresponding to an R channel, a G channel and a B channel.

At operation 1130, the cleaning robot selects image information of a preset color channel.

At operation 1140, the cleaning robot generates an image for determination from the selected image information. Specifically, when a plurality of channels is selected, the cleaning robot generates a composite image, in which pieces of image information corresponding to the selected channels are composed, as the image for the determination. When a single channel is selected, an image based on image information corresponding to the selected channel is generated as the image for the determination. For example, when the mark is previously set to be generated from the image information of the R and B channels, the cleaning robot selects and composes the image information of the R channel and the image information of the B channel. When the mark is previously set to be generated with only the image information of the R channel, the cleaning robot generates the image for determining the mark by using only the image information of the R channel.

At operation 1150 the cleaning robot determines whether the image generated for the determination has a pattern corresponding to the preset mark.

When the image for the determination has no patterns corresponding to the preset mark, the cleaning robot returns to the operation 1110 and performs the processes for finding the mark again.

On the other hand, when the image for the determination has the pattern corresponding to the preset mark, at operation 1160 the cleaning robot recognizes the image for the determination as the mark and moves toward the mark.

Like this, the cleaning robot according to the embodiment identifies the mark hidden in a specific image by analyzing the color space information of the image captured by the image sensor. Since the mark is hidden to be unrecognizable with naked eyes, this embodiment contributes to an aesthetic and security.

Meanwhile, the concept of the embodiment may be variously materialized in accordance with schemes for analyzing a surrounding image captured by the image sensor. Below, an embodiment different in scheme from the foregoing embodiments will be described.

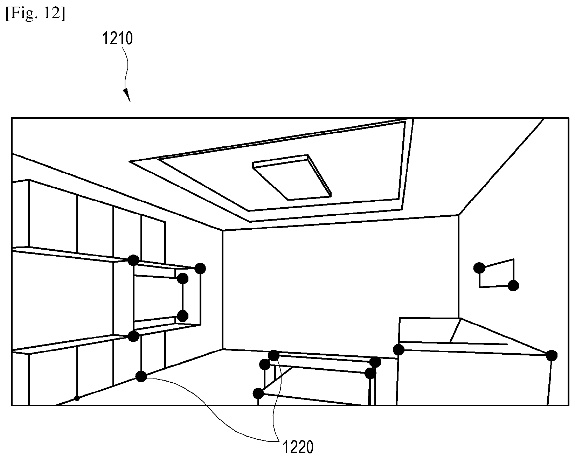

FIG. 12 illustrates an example that the cleaning robot according to an embodiment designates identification points in an image captured by in an image sensor image.

Referring to FIG. 12, the cleaning robot acquires a captured image 1210 of surroundings captured by the image sensor. The cleaning robot analyzes such an image 1210 to designates identification points 1220 corresponding to shapes of various objects in the image 1210. The designation of the identification points 1220 may be performed by various methods. For example, an object recognition method may be used.

The mark in this embodiment includes two elements. The mark includes a plurality of identifying portions forming a figure of a preset shape, and a feature portion arranged inside the figure formed by the plurality of identifying portions. The identifying portion has at least a size and shape that can be extracted as the identification points 1220 within the image 1210. For example, the identifying portion is provided in a simple form of a triangle, a quadrangle, a circle, etc. The feature portion includes characteristic image information of various shapes identifiable by the cleaning robot within the captured image 1210. For example, the feature portion includes a logo, a graphic image object, a text or figure having a complicated structure, etc.

Below, a method of finding the mark within the image 1210 captured by the image sensor will be described.

For example, when the image 1210 is generated by the image sensor capturing an inner side of home, the image 1210 may include various objects such as furniture, a refrigerator, a TV, a washing machine, a bed, a sofa, a table, a chair, a bookshelf, a window, etc. The cleaning robot determines the shapes of such objects within the image 1210, and designates the identification points 1220 within the image 1210 based on the determined shape. As an example of designating the identification points 1220 based on the shape of the object, the contour of the object may be identified to designate at least some of edges or vertices of the object as the identification points 1220. To identify the contour, various edge detecting algorithms may be used.

When the plurality of identification points 1220 is designated from the image 1210, the cleaning robot determines the mark of the docking station based on the plurality of designated identification points 1220. Below, descriptions will be made with regard to a method of determining the mark based on the plurality of identification points 1220.

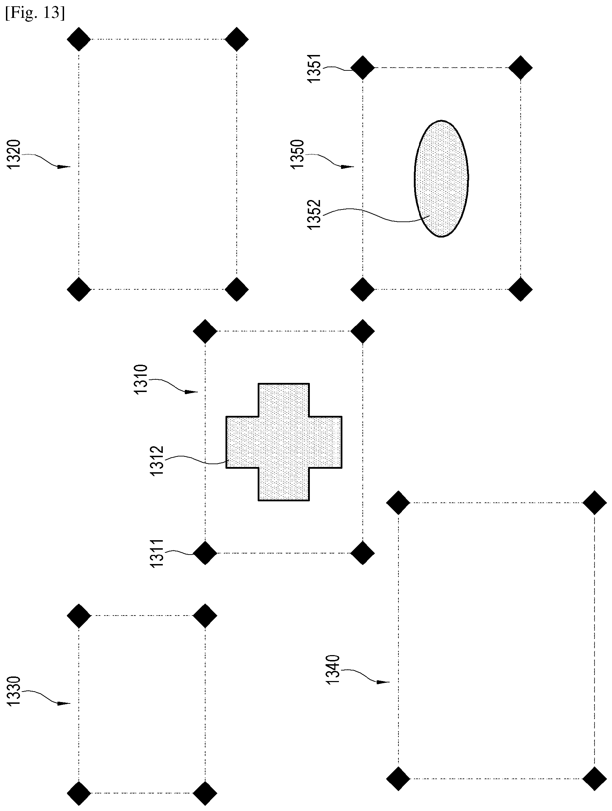

FIG. 13 illustrates an example that the cleaning robot according to an embodiment extracts the identification points from the image captured by the image sensor.

Referring to FIG. 13, the cleaning robot divides identification points extracted from an image into groups 1310, 1320, 1330, 1340 and 1350. One group 1310, 1320, 1330, 1340 or 1350 corresponds to one figure formed by the plurality of identification points, and the shape of such a figure corresponds to a preset shape. That is, when the preset shape is a quadrangle, the cleaning robot identifies groups 1310, 1320, 1330, 1340 and 1350 of the identification points, which form the quadrangle. Of course, this embodiment is to ultimately find the location of the docking station, and therefore the identification points included in one group 1310, 1320, 1330, 1340 and 1350 have to belong to one object within the image captured by the image sensor. That is, it is not allowed to make some identification points belong to one object and the other identification points belong to another object among the plurality of identification points included in one group 1310, 1320, 1330, 1340 or 1350.

Meanwhile, in this embodiment, there are five groups 1310, 1320, 1330, 1340 and 1350 each of which forms a quadrangle with four identification points. A first group 1310 includes four identification points 1311, and each of the other four groups 1320, 1330, 1340 and 1350 also includes four identification points.

The cleaning robot determines which one among the groups 1310, 1320, 1330, 1340 and 1350 of the identification points includes a preset characteristic image 1312. For example, the cleaning robot determines that a first group 1310 including the preset characteristic image 1312 is the mark. On the other hand, the cleaning robot determines that a second group 1320, a third group 1330 and a fourth group 1340, which do not include the preset characteristic image 1312, are not the mark. Further, the cleaning robot determines that the fifth group 1350 is not the mark since the fifth group 1350 does not include the preset characteristic image 1312 but a different image 1352 even though the fifth group 1350 has four identification points 1351.

Like this, the cleaning robot designates the plurality of identification points along the contour of the objects within the captured image, forms the groups based on the identification points with regard to the respective objects, and determines one among the groups based on the identification points, which includes the preset image, as the mark. Thus, the cleaning robot recognizes the mark by the scheme different from those of the foregoing embodiments.

Below, a control method of the cleaning robot will be described.

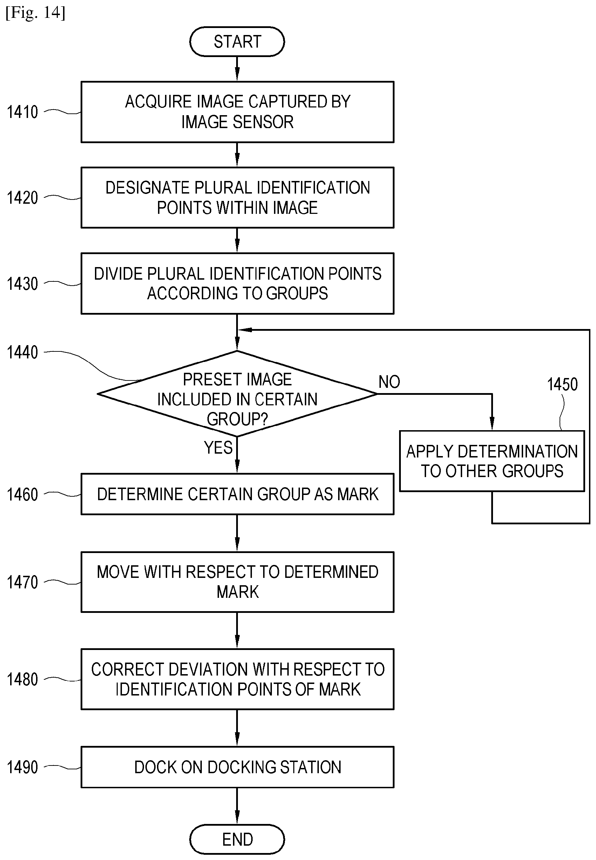

FIG. 14 is a flowchart of a control method for the cleaning robot according to an embodiment.

Referring to FIG. 14, at operation 1410 the cleaning robot acquires an image captured by the image sensor.

At operation 1420 the cleaning robot designates the plurality of identification points with respect to the objects within the image. For example, the cleaning robot determines the contour of each object within the image, in which the identification points may be marked at the edges, vertices, etc. of the contour.

At operation 1430, the cleaning robot groups the plurality of identification points according to the objects. That is, the cleaning robot groups the identification points corresponding to one group into one group.

At operation 1440, the cleaning robot determines whether one group includes a preset image. In this operation, the cleaning robot determines whether the shape of the group corresponds to a preset figure, and then applies the determination to only the corresponding group. Alternatively, the cleaning robot may apply the determination to all the groups without determining the shape of the group.

When the corresponding group includes the preset image, at operation 1450 the cleaning robot determines the corresponding group as the mark. On the other hand, when the corresponding group does not include the preset image, at operation 1460 the cleaning robot applies the determination to the other groups.

At operation 1470 the cleaning robot moves with respect to the determined mark.

At operation 1480 the cleaning robot corrects deviation of the cleaning robot with respect to the identification points of the mark when it is close to the mark. Here, the correction of the deviation based on the identification points is equivalent to the correction of the deviation based on the feature points according to the foregoing embodiments, and thus detailed descriptions thereof will be omitted.

At operation 1490 the cleaning robot is docked on the docking station.

Thus, the cleaning robot recognizes the mark of the docking station, and moves with respect to the recognized mark so as to be docked on the docking station.

Below, the internal elements of the cleaning robot will be described.

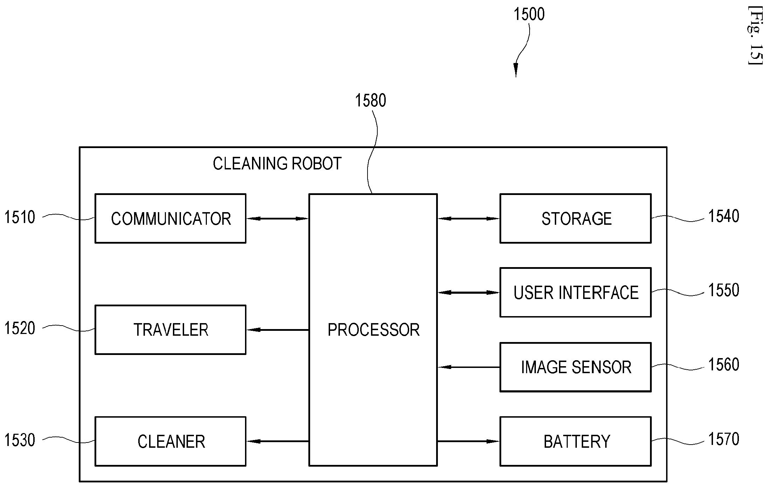

FIG. 15 is a block diagram of the cleaning robot according to an embodiment.

Referring to FIG. 15, the cleaning robot 1500 includes a communicator 1510 (e.g., a transceiver or communication circuit) for communicating with external apparatuses, a traveler 1520 for moving the cleaning robot 1500, a cleaner 1530 for cleaning a floor while the cleaning robot 1500 is moving, a storage 1540 for storing information about a moving path of the cleaning robot 1500, a user interface 1550 for receiving a control command from a user and displaying state information of the cleaning robot 1500, an image sensor 1560 for capturing an image of surroundings of the cleaning robot 1500, a battery 1570 for supplying power to operate the cleaning robot 1500, and a processor 1580 (e.g., at least one processor) for controlling the operations of the traveler 1520 or the cleaner 1530 in response to a captured result of the image sensor 1560 or an input to the user interface 1550.

The traveler 1520, the cleaner 1530, the user interface 1550, the image sensor 1560 and the like elements have been already described in the foregoing embodiments.

The communicator 1510 includes a communication circuit, a communication chip or the like hardware to perform wireless communication with a certain external apparatus, for example, the docking station through various wireless protocols. In accordance with the protocols supported in the communicator 1510, communication with a server may be performed through a wide area network (WAN) by accessing a communication relay such as an access point. For example, the communicator 1510 may support various wireless communication protocols such as Wi-Fi, Bluetooth (BT), Infrared, radio frequency (RF), ZigBee, Wi-Fi direct, etc.

The storage 1540, in which data is stored or loaded, includes a nonvolatile memory in which data is retained regardless of whether system power is supplied or not, and a volatile memory in which data to be processed by the processor 1580 is temporarily loaded. The nonvolatile memory includes a flash memory, a hard disk drive (HDD), a solid state drive (SSD), a read only memory, etc. The volatile memory includes a random access memory (RAM), a buffer, etc. The storage 1540 may be configured to store various pieces of information to be referred by the processor 1580 for the operations of the cleaning robot 1500, for example, information about a map of surroundings where the operations of the cleaning robot 1500 are performed, information about a moving path of the cleaning robot 1500 on the map, information about a schedule for the operations of the cleaning robot 1500, etc.

The battery 1570 is provided to be rechargeable when internal power is exhausted, so that it can be used again. The battery 1570 supplies power of a preset voltage to the elements of the cleaning robot 1500 in response to a control signal from the processor 1580. The battery 1570 has an external terminal via which power from the docking station is transferred to the battery 1570 while the cleaning robot 1500 is being docked on the docking station.

The processor 1580 refers to combination of a central processing unit (CPU), a chipset and a microcontroller, or a circuit materialized by a system on chip (SoC). The processor 1580 performs computing and directing operations for general operations to be performed by the cleaning robot 1500. The operations of the cleaning robot 1500 according to this embodiment are basically performed by the processor 1580, and detailed descriptions thereof are the same as described above.

The methods according to the foregoing embodiments may be achieved in the form of a program command that can be implemented in various computers, and recorded in a computer readable medium. Such a computer readable medium may include a program command, a data file, a data structure or the like, or combination thereof. For example, the computer readable medium may be stored in a voltage or nonvolatile storage such as a read only memory (ROM) or the like, regardless of whether it is deletable or rewritable, for example, a RAM, a memory chip, a device or integrated circuit (IC) or the like memory, or an optically or magnetically recordable or machine (e.g., a computer)-readable storage medium, for example, a compact disk (CD), a digital versatile disc (DVD), a magnetic disk, a magnetic tape or the like. It will be appreciated that a memory, which can be included in a mobile terminal, is an example of the machine-readable storage medium suitable for storing a program having instructions for realizing the embodiments. The program command recorded in this storage medium may be specially designed and configured according to the embodiments, or may be publicly known and available to those skilled in the art of computer software.

While the disclosure has been shown and described with reference to various embodiments thereof, it will be understood by those skilled in the art that various changes in form and detail may be made therein without departing from the scope of the invention as defined by the appended claims.

## Claims

1. A moving apparatus (110, 210) for cleaning, the moving apparatus comprising:
a cleaner (113, 1530) for cleaning;
a traveller (112, 1520) for moving the moving apparatus;
an image sensor (114, 211, 1050, 1560) for capturing an image (1010) of surroundings of the moving apparatus; and
at least one processor (1580) configured to:
control the image sensor to capture the image,
identify, within the captured image, a mark among a plurality of marks (610, 620, 810, 1020) provided on the outer side of a station apparatus (120, 220), the moving apparatus being **characterised in that** the plurality of marks are different from each other in shape and size according to corresponding distances from the station apparatus of locations at which they are provided to be recognized, the shape and the size of the identified mark corresponding to either a long-distance range or a short-distance range between the moving apparatus and the station apparatus (120, 220), a larger size mark having a first shape (610) corresponding to the long-distance range between the moving apparatus and the station apparatus and a smaller size mark having a second shape (620) corresponding to the short-distance range between the moving apparatus and the station apparatus,
based on the identified mark having a first shape, identify a first operation corresponding to the long-distance range among a plurality of operations,
based on the identified mark having a second shape different from the first shape, identify a second operation corresponding to the short-distance range among the plurality of operations, and
control the traveller based on the identified first operation or the identified second operation, to move the moving apparatus to a location of the station apparatus.

2. The moving apparatus according to claim 1, wherein a first mark (610) among the plurality of marks has the first shape and a second mark (620) among the plurality of marks has the second shape, and
wherein the at least one processor (1580) is further configured to:
control the moving apparatus to move toward the first mark when the first mark is identified, and
control the moving apparatus to move toward the second mark by repositioning the moving apparatus so as to correct deviation of the moving apparatus in relation to the station apparatus (120, 220) when the second mark is identified while the moving apparatus is moving toward the first mark.

3. The moving apparatus according to claim 2, wherein the at least one processor (1580) is further configured to:
determine a distortion of the second mark based on a relative position difference between a plurality of points (811 to 814, 911 to 914) extracted from the second mark; and
correct the deviation of the moving apparatus in relation to the station apparatus (120, 220) by rotating the moving apparatus so that no distortion of the second mark is identified from the captured image (1010).

4. The moving apparatus according to claim 3, wherein the at least one processor (1580) is further configured to designate the plurality of points along a contour of the second mark.

5. The moving apparatus according to claim 2, wherein the second mark is arranged to be overlapped within the first mark at a certain area of the station apparatus (120, 220).

6. The moving apparatus according to claim 2, wherein the second mark is arranged to be separated from the first mark at a certain area of the station apparatus (120, 220).

7. The moving apparatus according to claim 1, wherein the at least one processor (1580) is further configured to:
divide the captured image (1010) into a plurality of colour channels; and
acquire the at least one mark from image information of one or more colour channels previously set among the plurality of colour channels.

8. The moving apparatus according to claim 1, wherein the at least one processor (1580) is further configured to:
designate a plurality of identification points corresponding to one or more objects within the captured image (1010),
group the plurality of identification points into a plurality of groups (1310, 1320, 1330, 1340, 1350), and
identify the mark corresponding to a group comprising a pre-set image (1312) among the plurality of groups within the captured image,
based on the identified mark, determine a relative distance of the moving apparatus from the station apparatus (120, 220).

9. A method of controlling a moving apparatus for cleaning, the method comprising:
capturing an image (1010) of surroundings of the moving apparatus;
identifying, within the captured image, a mark among a plurality of marks (610, 620, 810, 1020) provided on the outer side of a station apparatus (120, 220), the method being **characterised in that** the plurality of marks are different from each other in shape and size according to corresponding distances from the station apparatus of locations at which they are provided to be recognized, the shape and the size of the mark corresponding to either a long-distance range or a short-distance range between the moving apparatus and the station apparatus (120, 220), a larger size mark having a first shape (610) corresponding to the long-distance range between the moving apparatus and the station apparatus and a smaller size mark having a second shape (620) corresponding to the short-distance range between the moving apparatus and the station apparatus;
based on the identified mark having a first shape, identifying a first operation corresponding to the long-distance range among a plurality of operations;
based on the identified mark having a second shape different from the first shape, identifying a second operation corresponding to the short-distance range among a plurality of operations; and
based on the identified first operation or the identified second operation, moving the moving apparatus to a location of the station apparatus.

10. The method according to claim 9, wherein a first mark (610) among the plurality of marks has the first shape and a second mark (620) among the plurality of marks has the second shape,
wherein the moving of the moving apparatus comprises:
moving the moving apparatus toward the first mark when the first mark is identified; and
moving the moving apparatus toward the second mark by repositioning the moving apparatus so as to correct deviation of the moving apparatus in relation to the station apparatus (120, 220) when the second mark is identified while the moving apparatus is moving toward the first mark.

11. The method according to claim 10, wherein the moving of the moving apparatus toward the second mark comprises:
identifying a distortion of the second mark based on a relative position difference between a plurality of points (811 to 814, 911 to 914) extracted from the second mark; and
rotating the moving apparatus so that no distortion of the second mark is identified from the captured image (1010).

12. The method according to claim 11, wherein the moving of the moving apparatus toward the second mark comprises designating the plurality of points along a contour of the second mark.

## Patentansprüche

1. Bewegliche Vorrichtung (110, 210) zur Reinigung, wobei die bewegliche Vorrichtung Folgendes umfasst:
einen Reiniger (113, 1530) zur Reinigung;
einen Läufer (112, 1520) zum Bewegen der beweglichen Vorrichtung;
einen Bildsensor (114, 211, 1050, 1560) zum Aufnehmen eines Bildes (1010) von Umgebung der beweglichen Vorrichtung; und
zumindest einen Prozessor (1580), der zu Folgendem konfiguriert ist:
Steuern des Bildsensors, um das Bild aufzunehmen,
Identifizieren, innerhalb des aufgenommenen Bildes, einer Markierung unter einer Vielzahl von Markierungen (610, 620, 810, 1020), die an der Außenseite einer Stationsvorrichtung (120, 220) bereitgestellt ist,
wobei die bewegliche Vorrichtung **dadurch gekennzeichnet ist, dass**
sich die Vielzahl von Markierungen in Form und Größe gemäß entsprechenden Abständen von der Stationsvorrichtung von Stellen, an denen sie bereitgestellt sind, um erkannt zu werden, voneinander unterscheidet,
die Form und die Größe der identifizierten Markierung entweder einem Langstreckenbereich oder einem Kurzstreckenbereich zwischen der beweglichen Vorrichtung und der Stationsvorrichtung (120, 220) entsprechen, wobei eine größere Größenmarkierung eine erste Form (610) entsprechend dem Langstreckenbereich zwischen der beweglichen Vorrichtung und der Stationsvorrichtung aufweist und eine kleinere Größenmarkierung eine zweite Form (620) entsprechend dem Kurzstreckenbereich zwischen der beweglichen Vorrichtung und der Stationsvorrichtung aufweist,
basierend darauf, dass die identifizierte Markierung eine erste Form aufweist, Identifizieren eines ersten Vorgangs entsprechend dem Langstreckenbereich unter einer Vielzahl von Vorgängen,
basierend darauf, dass die identifizierte Markierung eine zweite Form aufweist, die sich von der ersten Form unterscheidet, Identifizieren eines zweiten Vorgangs entsprechend dem Kurzstreckenbereich unter der Vielzahl von Vorgängen, und
Steuern des Läufers basierend auf dem identifizierten ersten Vorgang oder dem identifizierten zweiten Vorgang, um die bewegliche Vorrichtung zu einer Stelle der Stationsvorrichtung zu bewegen.

2. Bewegliche Vorrichtung nach Anspruch 1, wobei eine erste Markierung (610) unter der Vielzahl von Markierungen die erste Form aufweist und eine zweite Markierung (620) unter der Vielzahl von Markierungen die zweite Form aufweist, und
wobei der zumindest eine Prozessor (1580) ferner zu Folgendem konfiguriert ist:
Steuern der beweglichen Vorrichtung, um sich zu der ersten Markierung zu bewegen, wenn die erste Markierung identifiziert wird, und
Steuern der beweglichen Vorrichtung, um sich zu der zweiten Markierung zu bewegen, durch Neupositionieren der beweglichen Vorrichtung, um Abweichung der beweglichen Vorrichtung in Bezug auf die Stationsvorrichtung (120, 220) zu korrigieren, wenn die zweite Markierung identifiziert wird, während sich die bewegliche Vorrichtung zu der ersten Markierung bewegt.

3. Bewegliche Vorrichtung nach Anspruch 2, wobei der zumindest eine Prozessor (1580) ferner zu Folgendem konfiguriert ist:
Bestimmen einer Verzerrung der zweiten Markierung basierend auf einem relativen Positionsunterschied zwischen einer Vielzahl von Punkten (811 bis 814, 911 bis 914), die aus der zweiten Markierung extrahiert wird; und
Korrigieren der Abweichung der beweglichen Vorrichtung in Bezug auf die Stationsvorrichtung (120, 220) durch Drehen der beweglichen Vorrichtung, sodass keine Verzerrung der zweiten Markierung aus dem aufgenommenen Bild (1010) identifiziert wird.

4. Bewegliche Vorrichtung nach Anspruch 3, wobei der zumindest eine Prozessor (1580) ferner dazu konfiguriert ist, die Vielzahl von Punkten entlang einer Kontur der zweiten Markierung zu benennen.

5. Bewegliche Vorrichtung nach Anspruch 2, wobei die zweite Markierung dazu angeordnet ist, innerhalb der ersten Markierung an einem bestimmten Bereich der Stationsvorrichtung (120, 220) überlappt zu sein.

6. Bewegliche Vorrichtung nach Anspruch 2, wobei die zweite Markierung dazu angeordnet ist, von der ersten Markierung an einem bestimmten Bereich der Stationsvorrichtung (120, 220) getrennt zu sein.

7. Bewegliche Vorrichtung nach Anspruch 1, wobei der zumindest eine Prozessor (1580) ferner zu Folgendem konfiguriert ist:
Unterteilen des aufgenommenen Bildes (1010) in eine Vielzahl von Farbkanälen; und
Erfassen der zumindest einen Markierung aus Bildinformationen von einem oder mehreren Farbkanälen, die zuvor unter der Vielzahl von Farbkanälen festgelegt werden.

8. Bewegliche Vorrichtung nach Anspruch 1, wobei der zumindest eine Prozessor (1580) ferner zu Folgendem konfiguriert ist:
Benennen einer Vielzahl von Identifikationspunkten entsprechend einem oder mehreren Objekten innerhalb des aufgenommenen Bildes (1010),
Gruppieren der Vielzahl von Identifikationspunkten in eine Vielzahl von Gruppen (1310, 1320, 1330, 1340, 1350), und
Identifizieren der Markierung entsprechend einer Gruppe, die ein zuvor festgelegtes Bild (1312) umfasst, unter der Vielzahl von Gruppen innerhalb des aufgenommenen Bildes,
basierend auf der identifizierten Markierung, Bestimmen eines relativen Abstands der beweglichen Vorrichtung von der Stationsvorrichtung (120, 220).

9. Verfahren zur Steuerung einer beweglichen Vorrichtung zur Reinigung, wobei das Verfahren Folgendes umfasst:
Aufnehmen eines Bildes (1010) von Umgebung der beweglichen Vorrichtung;
Identifizieren, innerhalb des aufgenommenen Bildes, einer Markierung unter einer Vielzahl von Markierungen (610, 620, 810, 1020), die an der Außenseite einer Stationsvorrichtung (120, 220) bereitgestellt ist,
wobei das Verfahren **dadurch gekennzeichnet ist, dass**
sich die Vielzahl von Markierungen in Form und Größe gemäß entsprechenden Abständen von der Stationsvorrichtung von Stellen, an denen sie bereitgestellt sind, um erkannt zu werden, voneinander unterscheidet,
die Form und die Größe der Markierung entweder einem Langstreckenbereich oder einem Kurzstreckenbereich zwischen der beweglichen Vorrichtung und der Stationsvorrichtung (120, 220) entsprechen, wobei eine größere Größenmarkierung eine erste Form (610) entsprechend dem Langstreckenbereich zwischen der beweglichen Vorrichtung und der Stationsvorrichtung aufweist und eine kleinere Größenmarkierung eine zweite Form (620) entsprechend dem Kurzstreckenbereich zwischen der beweglichen Vorrichtung und der Stationsvorrichtung aufweist;
basierend darauf, dass die identifizierte Markierung eine erste Form aufweist, Identifizieren eines ersten Vorgangs entsprechend dem Langstreckenbereich unter einer Vielzahl von Vorgängen;
basierend darauf, dass die identifizierte Markierung eine zweite Form aufweist, die sich von der ersten Form unterscheidet, Identifizieren eines zweiten Vorgangs entsprechend dem Kurzstreckenbereich unter einer Vielzahl von Vorgängen; und
basierend auf dem identifizierten ersten Vorgang oder dem identifizierten zweiten Vorgang, Bewegen der beweglichen Vorrichtung zu einer Stelle der Stationsvorrichtung.

10. Verfahren nach Anspruch 9, wobei eine erste Markierung (610) unter der Vielzahl von Markierungen die erste Form aufweist und eine zweite Markierung (620) unter der Vielzahl von Markierungen die zweite Form aufweist,
wobei das Bewegen der beweglichen Vorrichtung Folgendes umfasst:
Bewegen der beweglichen Vorrichtung zu der ersten Markierung, wenn die erste Markierung identifiziert wird; und
Bewegen der beweglichen Vorrichtung zu der zweiten Markierung durch Neupositionieren der beweglichen Vorrichtung, um Abweichung der beweglichen Vorrichtung in Bezug auf die Stationsvorrichtung (120, 220) zu korrigieren, wenn die zweite Markierung identifiziert wird, während sich die bewegliche Vorrichtung zu der ersten Markierung bewegt.

11. Verfahren nach Anspruch 10, wobei das Bewegen der beweglichen Vorrichtung zu der zweiten Markierung Folgendes umfasst:
Identifizieren einer Verzerrung der zweiten Markierung basierend auf einem relativen Positionsunterschied zwischen einer Vielzahl von Punkten (811 bis 814, 911 bis 914), die aus der zweiten Markierung extrahiert wird; und
Drehen der beweglichen Vorrichtung, sodass keine Verzerrung der zweiten Markierung aus dem aufgenommenen Bild (1010) identifiziert wird.

12. Verfahren nach Anspruch 11, wobei das Bewegen der beweglichen Vorrichtung zu der zweiten Markierung Benennen der Vielzahl von Punkten entlang einer Kontur der zweiten Markierung umfasst.

## Revendications

1. Appareil mobile (110, 210) destiné au nettoyage, l'appareil mobile comprenant :
un dispositif de nettoyage (113, 1530) destiné au nettoyage ;
un dispositif roulant (112, 1520) destiné à déplacer l'appareil mobile ;
un capteur d'image (114, 211, 1050, 1560) destiné à capturer une image (1010) de l'environnement de l'appareil mobile ; et
au moins un processeur (1580) configuré pour :
commander le capteur d'image pour capturer l'image,
identifier, dans l'image capturée, une marque parmi une pluralité de marques (610, 620, 810, 1020) prévues sur le côté externe d'un appareil de station (120, 220),
l'appareil mobile étant **caractérisé en ce que** la pluralité de marques sont différentes les unes des autres en forme et en taille selon des distances correspondantes à partir de l'appareil de station des emplacements au niveau desquels elles sont prévues pour être reconnues,
la forme et la taille de la marque identifiée correspondant soit à une portée longue distance soit à une portée courte distance entre l'appareil mobile et l'appareil de station (120, 220), une marque de taille plus grande possédant une première forme (610) correspondant à la portée longue distance entre l'appareil mobile et l'appareil de station et une marque de taille plus petite possédant une seconde forme (620) correspondant à la portée courte distance entre l'appareil mobile et l'appareil de station,
sur la base de la marque identifiée possédant une première forme, identifier une première opération correspondant à la portée longue distance parmi une pluralité d'opérations,
sur la base de la marque identifiée possédant une seconde forme différente de la première forme, identifier une seconde opération correspondant à la plage de courte distance parmi la pluralité d'opérations, et
commander le dispositif roulant sur la base de la première opération identifiée ou de la seconde opération identifiée, pour déplacer l'appareil mobile vers un emplacement de l'appareil de station.

2. Appareil mobile selon la revendication 1, une première marque (610) parmi la pluralité de marques possédant la première forme et une seconde marque (620) parmi la pluralité de marques possédant la seconde forme, et
ledit au moins un processeur (1580) étant en outre configuré pour :
commander l'appareil mobile pour qu'il se déplace vers la première marque lorsque la première marque est identifiée, et
commander l'appareil mobile pour qu'il se déplace vers la seconde marque en repositionnant l'appareil mobile de façon à corriger la déviation de l'appareil mobile par rapport à l'appareil de station (120, 220) lorsque la seconde marque est identifiée pendant que l'appareil mobile se déplace vers la première marque.

3. Appareil mobile selon la revendication 2, ledit au moins un processeur (1580) étant en outre configuré pour :
déterminer une distorsion de la seconde marque sur la base d'une différence de position relative entre une pluralité de points (811 à 814, 911 à 914) extraits de la seconde marque ; et
corriger la déviation de l'appareil mobile par rapport à l'appareil de station (120, 220) en faisant tourner l'appareil mobile afin qu'aucune distorsion de la seconde marque ne soit identifiée à partir de l'image capturée (1010).

4. Appareil mobile selon la revendication 3, ledit au moins un processeur (1580) étant en outre configuré pour désigner la pluralité de points le long d'un contour de la seconde marque.

5. Appareil mobile selon la revendication 2, ladite seconde marque étant agencée pour être chevauchée à l'intérieur de la première marque au niveau d'une certaine zone de l'appareil de station (120, 220).

6. Appareil mobile selon la revendication 2, ladite seconde marque étant agencée pour être séparée de la première marque au niveau d'une certaine zone de l'appareil de station (120, 220).

7. Appareil mobile selon la revendication 1, ledit au moins un processeur (1580) étant en outre configuré pour :
diviser l'image capturée (1010) en une pluralité de canaux de couleur ; et
acquérir la au moins une marque à partir d'informations d'image d'un ou plusieurs canaux de couleur préalablement définis parmi la pluralité de canaux de couleur.

8. Appareil mobile selon la revendication 1, ledit au moins un processeur (1580) étant en outre configuré pour :
désigner une pluralité de points d'identification correspondant à un ou plusieurs objets dans l'image capturée (1010),
regrouper la pluralité de points d'identification en une pluralité de groupes (1310, 1320, 1330, 1340, 1350), et
identifier la marque correspondant à un groupe comprenant une image prédéfinie (1312) parmi la pluralité de groupes dans l'image capturée,
sur la base de la marque identifiée, déterminer une distance relative de l'appareil mobile par rapport à l'appareil de station (120, 220).

9. Procédé de commande d'un appareil mobile destiné au nettoyage, le procédé comprenant :
la capture d'une image (1010) de l'environnement de l'appareil mobile ;
l'identification, dans l'image capturée, d'une marque parmi une pluralité de marques (610, 620, 810, 1020) prévues sur le côté externe d'un appareil de station (120, 220),
le procédé étant **caractérisé en ce que** la pluralité de marques sont différentes les unes des autres en forme et en taille selon des distances correspondantes à partir de l'appareil de station des emplacements au niveau desquels elles sont prévues pour être reconnues,
la forme et la taille de la marque correspondant soit à une portée longue distance soit à une portée courte distance entre l'appareil mobile et l'appareil de station (120, 220), une marque de taille plus grande possédant une première forme (610) correspondant à la portée longue distance entre l'appareil mobile et l'appareil de station et une marque de taille plus petite possédant une seconde forme (620) correspondant à la portée courte distance entre l'appareil mobile et l'appareil de station ;
sur la base de la marque identifiée possédant une première forme, l'identification d'une première opération correspondant à la portée longue distance parmi une pluralité d'opérations ;
sur la base de la marque identifiée possédant une seconde forme différente de la première forme, l'identification d'une seconde opération correspondant à la plage de courte distance parmi une pluralité d'opérations ; et
sur la base de la première opération identifiée ou de la seconde opération identifiée, le déplacement de l'appareil mobile vers un emplacement de l'appareil de station.

10. Procédé selon la revendication 9, une première marque (610) parmi la pluralité de marques possédant la première forme et une seconde marque (620) parmi la pluralité de marques possédant la seconde forme,
ledit déplacement de l'appareil mobile comprenant :
le déplacement de l'appareil mobile vers la première marque lorsque la première marque est identifiée ; et
le déplacement de l'appareil mobile vers la seconde marque en repositionnant l'appareil mobile de façon à corriger la déviation de l'appareil mobile par rapport à l'appareil de station (120, 220) lorsque la seconde marque est identifiée pendant que l'appareil mobile se déplace vers la première marque.

11. Procédé selon la revendication 10, ledit déplacement de l'appareil mobile vers la seconde marque comprenant :
l'identification d'une distorsion de la seconde marque sur la base d'une différence de position relative entre une pluralité de points (811 à 814, 911 à 914) extraits de la seconde marque ; et
la rotation de l'appareil mobile afin qu'aucune distorsion de la seconde marque ne soit identifiée à partir de l'image capturée (1010).

12. Procédé selon la revendication 11, ledit déplacement de l'appareil mobile vers la seconde marque comprenant la désignation de la pluralité de points le long d'un contour de la seconde marque.
